# EUROPÄISCHE PATENTSCHRIFT

(11) **EP 0 535 712 B1**
(45) Veröffentlichungstag und Bekanntmachung des Hinweises auf die Patenterteilung: **10.05.1995**
(21) Anmeldenummer: 92116985.0
(22) Anmeldetag: 05.10.1992
(51) Int. Cl.: B60R 16/02

(54) **Kabelbaum oder Kabelkanal, insbesondere für Kraftfahrzeuge**
Wire harness or wire channel, particularly for a motor vehicle
Faisceau de câble ou puits à câbles, particulièrement pour une voiture automobile

(30) Priorität: 04.10.1991 DE 9112525 U; 27.01.1992 DE 9200909 U
(43) Veröffentlichungstag der Anmeldung: 07.04.1993
(73) Patentinhaber: Leonische Drahtwerke AG, 90402 Nürnberg (DE)
(72) Erfinder: Reichinger, Gerhard, W-8540 Rednitzhembach (DE); Köttgen, Hans, W-8801 Steinsfeld (DE)
(74) Vertreter: Tergau, Enno, Dipl.-Ing.

(56) Entgegenhaltungen:
- EP-A- 0 282 389
- FR-A- 1 152 317
- I.B.M TECHNICAL DISCLOSURE BULLETIN Bd. 19, Nr. 9, Februar 1977, Seite 3288 CRNICH 'RETRACTABLE ACCORDION - FOLD CABLE'

## Beschreibung

Die Erfindung betrifft einen Kabelbaum oder eine Leitungsführung insbesondere für Kraftfahrzeuge mit den Merkmalen den Oberbegriffs des Anspruches 1.

Derartige Kabelbäume oder Führungskanäle - beide nachstehend kurz "Leitungshalter" genannt - sind bekannt. Bei derartigen Leitungshaltern sind eine Vielzahl von Leitungen von einem Formkörper in ihrer Längserstreckung zumindest teilweise umhüllt. Um das Leitungsbündel an bestimmten Stellen biegen zu können, besteht der Formkörper in gewissen Bereichen aus einem Kunststoff mit hoher Elastizität. Solch eine Ausgestaltung des Formkörpers ermöglicht es, das Leitungsbündel einfacher zu verlegen und an ungeradlinige Leitungswege anzupassen. Leitungsbündel dieser Art sind z.B. aus EP-0 288 752 oder EP-0 418 882 bekannt.
Der Begriff "Leitungsbündel" steht hier stellvertretend für eine einzelne oder auch für mehrere Leitungen. Die Leitungen schließen Kabel, z.B. elektrische Kabel oder Lichtwellenleiter ein. Ebenso sind schlauchartige Leitungen wie Scheibenwaschwasserleitungen, Hydraulik- oder Pneumatikleitungen oder dergleichen gemeint. Auch Leitungen zum Weiterleiten mechanischer Energie, z.B. Bowdenzüge, sind denkbar.
Der Begriff "Kraftfahrzeuge" steht stellvertretend für Kfz und Lkw.

Im Fahrzeugbau kommt es vor, Fahrzeugtypen in unterschiedlichen Längen serienmäßig zu fertigen. Dies erfordert auch unterschiedlich lange Leitungswege zur Versorgung derselben technischen Einrichtungen in den verschiedenen Längenversionen des Fahrzeugtyps. Die aus den obengenannten Druckschritten bekannten Leitungsbündel sind jedoch genau entsprechend der Länge des für sie bestimmten Leitungsweges dimensioniert. Sie sind deshalb nicht dazu geeignet, je nach Bedarf in allen Längenversionen des Fahrzeugtyps eingesetzt zu werden. In der Fahrzeugindustrie war es bisher üblich, Leitungsbündel unterschiedlicher vorbestimmter Längen für die verschiedenen Versionen des selben Fahrzeugtyps vorrätig zu haben. Dies bedeutet jedoch erhöhte Fertigungs- und Logistikkosten.

Das Problem, für dieselbe technische Einrichtung mehrere Längenversionen des Leitungsbündels vorrätig zu haben, tritt jedoch nicht nur in der Fahrzeugindustrie auf, sondern auch überall dort, wo dieselbe technische Einrichtung in unterschiedlichen Räumlichkeiten untergebracht werden muß. Beispiele hierfür gibt es im Büro- und Schulbereich oder im Maschinenbau.

Aus FR 1 152 317 ist bereits ein Leitungsbündel mit den Merkmalen des Oberbegriffes des Anspruches 1 bekannt, dessen Wirklänge elastisch verlängerbar ist. Dazu sind die gebündelten Versorgungsleitungen zickzack-artig zur Längsrichtung des Bündels gelegt und die Zickzack-Legung ist durch eine in Bündellängsrichtung verlaufende Zugfeder aufrechterhalten. Durch in Bündellängsrichtung wirksamen Zug auf das Bündel läßt sich die Zugfeder dehnen mit der Folge, daß die Zickzack-Legung der Versorgungsleitungen in eine Streck- bzw. Verlängerungslage von einer Länge überführbar ist, die sich - bis zur Erreichung der vollständigen Strecklage des Bündels im wesentlichen proportional zur Zug- bzw. Streckkraft verhält. Diese Anordnung dient einer elastischen Anpaßbarkeit der Wirklänge des Leitungsbündels an die Lageveränderung eines durch das Leitungsbündel versorgten Elektrogerätes oder dergleichen, z.B. eines Telefons. Es ist beispielsweise bekannt, einen Telefonapparat auf einem Tablett oberhalb eines Arbeitstisches anzuordnen, bei welchem das Tablett über eine Nürnberger Schere mit einem mit dem Tisch fest verbundenen Drehständer fixiert ist. Die Nürnberger Schere dient dabei zur leichten Abstandsveränderung zwischen Tablett und Ständer, um das Tablett zum Telefonieren in die Nähe der Arbeitsposition überführen zu können, bei Nichtgebrauch des Telefons dieses aber in eine sitzferne Ruheposition zurückschieben zu können. Bei solchen Einrichtungen ist eine elastische Anpaßbarkeit des der Versorgung des Telefonapparates dienenden Leitungsbündels an die Wirklänge des Leitungsweges von Vorteil.

Die Zugfeder ermöglicht eine stufenlose und reversible Wirklängenänderung des Leitungsbündels. Die daraus resultierende Beweglichkeit des Leitungsbündels in Bündellängsrichtung steht jedoch im Widerspruch zu einer in bestimmten technischen Bereichen erforderlichen mechanisch stabilen Einbaulage des Leitungsbündels. Weiterhin kann die Zugfeder aufgrund ihrer Eigenelastizität die vorbestimmten Wirklängen des Leitungsbündels in ihrer Einbaulage nicht erhalten. Derartige mit Zugfedern versehene Leitungsbündel sind nur für technische Bereiche geeignet, bei denen die erforderliche Wirklänge des Leitungsbündels nicht vorbestimmbar ist und bei denen die Wirklänge auch in Einbaulage des Leitungsbündels ständig veränderbar sein muß.

Der Erfindung liegt die Aufgabe zugrunde, einen das Leitungsbündel enthaltenden Leitungshalter derart auszugestalten, daß die unterschiedlich langen Leitungswege mit ein- und demselben Leitungsbündel bestückbar sind. Dabei soll die vorbestimmte Länge des Leitungsbündels an abmessungsgemäß vorgegebene Montageverhältnisse bei dem betreffenden Fahrzeugtyp angepaßt sein.

Diese Aufgabe wird durch die Merkmalskombination des Anspruches 1 gelöst.

Die Material-Mehrkosten fallen gegenüber der bewirkten Typenreduzierung und gegenüber der Ersparnis an Logistikkosten nicht ins Gewicht.
Außerdem läßt sich die Umwegstrecke des Leitungsbündels in vorteilhafter Weise bei gebogenen Leitungswegführungen ausnutzen. Hierzu wird das Fixierelement ebenfalls gelöst und die Auslenkstellung des Leitungsbündels der Biegestelle der Leitungswegführung, z.B. eines Kabelschachtes, entsprechend angepaßt.
Enthält das Leitungsbündel mehrere, in Leitungslängsrichtung mit Abstand voneinander angeordnete Umwegstrecken, so ist eine noch flexiblere Anpassung ein- und desselben Leitungsbündels an unterschiedlich lange oder unterschiedlich gebogene Leitungswegführungen möglich.

Die Ansprüche 2 bis 8 betreffen bevorzugte Ausführungsformen der Umwegstrecke.
Je nach Anwendung und Einsatzort ist eine bestimmte Auslenkstellung der Umwegstrecke günstig bzw. erforderlich.

Eine nach Anspruch 4 ausgestaltete Umwegstrecke bewirkt eine nur unwesentliche Vergrößerung des Wirkquerschnittes des Leitungshalters im Bereich der Umwegstrecke. Hierdurch ist eine platzsparenden Anordnung der Umwegstrecke gewährleistet.

Die Umwegstrecke gemäß Anspruch 6 ermöglicht besonders große Wirklängenänderungen des Leitungsbündels.

Gemäß Anspruch 7 werden mechanische Überbeanspruchungen der Umwegstrecke durch Knickstellen vermieden. Außerdem wird der Transport von Flüssigkeiten bei Verwendung von Schläuchen als Leitungsbündel nicht behindert.

Nach Anspruch 9 ist gewährleistet, daß die Umwegstrecke ohne Lösung des Fixierelementes sicher in ihrer Auslenkstellung verbleibt.

Gemäß Anspruch 10 kann auf einfache Weise die kürzeste Wirkstrecke der Umwegstrecke und damit auch die größte Wirklängenänderung realisiert werden.

Die Ansprüche 11 bis 18 betreffen besondere Ausführungsformen des Fixierelementes.
Gemäß Anspruch 11 werden grundsätzlich bekannte und von dem Leitungshalter als separate Teile trennbare Fixierelemente vorgeschlagen.

Anspruch 12 betrifft eine besonders einfache und kostengünstige Herstellung des Fixierelementes. Aufwendige Verbindungstechniken werden vermieden.

Anspruch 13 betrifft eine bevorzugte Ausführungsform der Stoffschlußverbindung.

Gemäß Anspruch 14 ist eine ortsfeste Fixierung des Fixierelementes im Leitungshalter gewährleistet. Die Stabilität des Fixierelementes ist verbessert. Dadurch werden Verschiebungen oder mechanische Beschädigungen des Fixierelementes vermieden, so daß auch die Umwegstrecke sicher in ihrer Auslenkstellung verbleibt.

Ein nach Anspruch 15 ausgestaltetes Fixierelement gewährleistet ebenfalls eine gute Stabilität des Leitungshalters. Wegen der stofflichen Einheit sind der Leitungshalter und das Fixierelement einfach herstellbar. Die Verbindung zwischen Leitungshalter und Fixierelement ist gut vor Beschädigungen geschützt. Außerdem werden aufwendige Verbindungstechniken zwischen Fixierelment und Leitungshalter vermieden.

Nach Anspruch 16 ist die Stabilität zwischen Leitungshalter und Fixierelement weiter verbessert.

Ein nach Anspruch 17 ausgestaltetes Fixierelement ermöglicht eine einfache Wirklängenänderung des Leitungsbündels. Mechanische Beschädigungen des Fixierelementes während des Lösevorganges werden ebenso vermieden.

Anspruch 18 betrifft eine bevorzugte Anordnung des Fixierelementes. Die Außenkontur des Leitungshalters im Bereich der Umwegstrecke wird deshalb im wesentlichen beibehalten. Das Fixierelement erfordert keinen zusätzlichen Platzbedarf bei der Verlegung des Leitungsbündels in einem Leitungsweg.

Die Ansprüche 19 und 20 betreffen bevorzugte Ausführungsformen des Führungskanals zur losen Einlage des Leitungsbündels. Derartige Führungskanäle eignen sich zur geschützten Lagerung und zum Transport von Leitungsbündeln. Die Führungskanäle lassen sich bequem mit dem Leitungsbündel bestücken. Die Leitungsbündel sind auch problemlos austauschbar.

Anspruch 21 betrifft eine bevorzugte Ausführungsform des Kabelbaumes zum Schutz des Leitungsbündels vor mechanischen Beschädigungen.
Im Falle von elektrischen Leitungen ist durch den mechanischen Schutz auch die Kurzschlußgefahr verringert.

Der Erfindungsgegenstand wird anhand der in den Zeichnungen dargestellten Ausführungsbeispiele näher erläutert. Es zeigen:
- Fig. 1: eine Seitenansicht eines Führungskanals,
- Fig. 2: einen vergrößerten Querschnitt durch den Führungskanal entsprechend der Schnittlinie II-II in Fig. 1,
- Fig. 3: die Seitenansicht eines Kabels von vorbestimmter Länge,
- Fig. 4: eine Draufsicht eines Kabelbaumes,
- Fig. 5: eine perspektivische Darstellung eines weiteren Kabelbaumes,
- Fig. 6: die perspektivische Darstellung des Kabelbaumes in Fig. 5, jedoch bei maximaler Wirklänge der Umwegstrecke,
- Fig. 7: die perspektivische Darstellung eines weiteren Kabelbaumes,
- Fig. 8: die perspektivische Darstellung eines weiteren Kabelbaumes,
- Fig. 9: die perspektivische Darstellung eines in einem Führungskanal einliegenden Leitungsbündels.

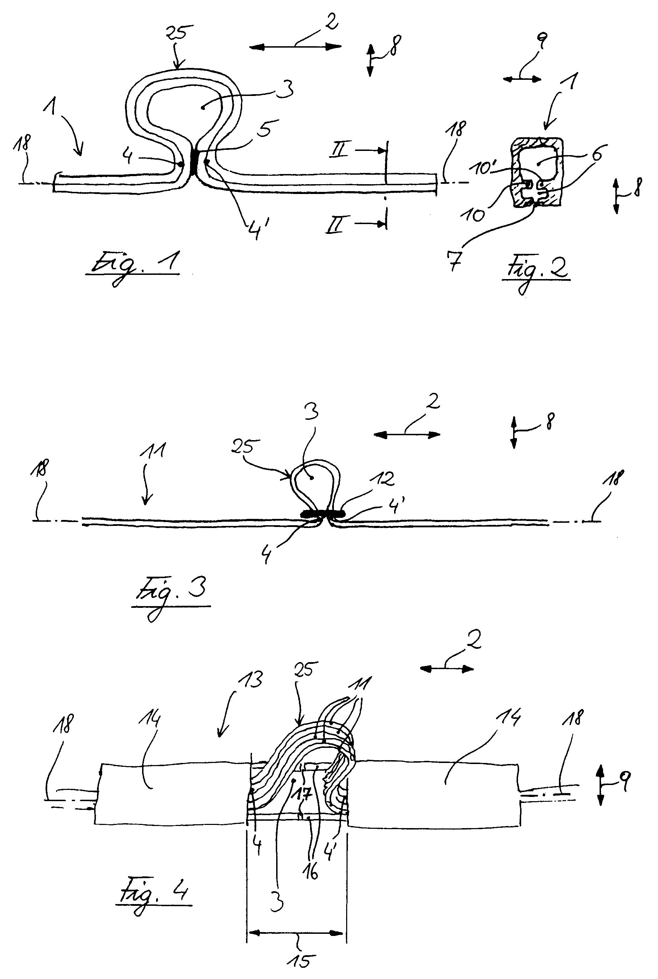

In Fig. 1 weist ein Führungskanal 1 zwei in einer Leitungslängsrichtung 2 verlaufende Abschnitte und eine zwischen den beiden Abschnitten angeordnete, als Schleife 3 wirksame Umwegstrecke 25 auf. Die Schleife 3 ist in Fig. 1 Ω-förmig ausgestaltet. Die Schleife 3 weist zwei Schleifenenden 4,4' auf. Die beiden Schleifenenden 4,4' stellen die Verbindung zwischen der Schleife 3 und den beiden in Leitungslängsrichtung 2 verlaufenden Abschnitten des Führungskanals 1 her. Die Schleifenenden 4,4' sind aneinandergelegt und durch ein Fixierelement 5 miteinander verbunden.

Das Fixierlement 5 in Fig. 1 ist vorzugsweise als stoffschlüssige Verbindung der beiden Schleifenenden 4,4' ausgebildet. Der Stoffschluß wird beispielsweise durch eine Schweißverbindung oder eine Klebung erreicht.

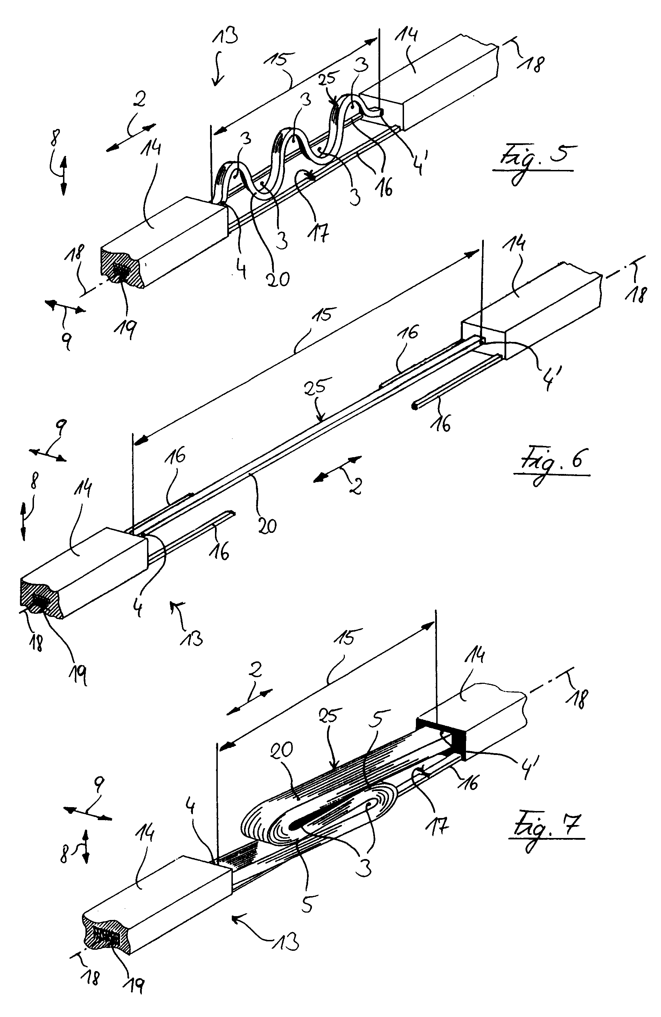

Der Führungskanal 1 (Fig. 1) weist eine etwa rechteckige Querschnittsform (Fig. 2) mit zwei Kavitäten 6 und einem Einführungsschlitz 7 zum Einlegen eines Leitungsbündels auf. Der Einführungsschlitz 7 verläuft entlang der Leitungslängsrichtung 2 und trennt den gesamten Führungskanal 1 an seiner Mantelfläche auf. Im Bereich des Fixierelements 5 befindet sich der Einführungsschlitz 7 an den in Leitungslängsrichtung 2 einander abgewandten Bereichen der Mantelfläche des Führungskanals 1.

Die Kavitäten 6 sind parallel zur Leitungslängsrichtung 2 übereinander in einer zur Leitungslängsrichtung 2 senkrecht stehenden Höhenrichtung 8 angeordnet. Die dem Einführungsschlitz 7 in Höhenrichtung 8 näher angeordnete Kavität 6 weist einen rechteckigen Querschnitt auf. Dieser Querschnitt ist erheblich kleiner als der etwa quadratische Querschnitt der zweiten, vom Einführungsschlitz 7 in Höhenrichtung 8 entfernter angeordneten Kavität 6. Zwischen den beiden Kavitäten 6 sind zwei in einer zur Leitungslängsrichtung 2 und Höhenrichtung 8 senkrecht angeordneten Querrichtung 9 zwei Trennstege 10,10' an die sich gegenüberliegenden Innenwände des Führungskanals 1 angeformt. Mittels der Trennstege 10,10' sollen die Leitungsbündel in der jeweils zugeordneten Kavität 6 sicher verbleiben. Die Trennstege 10,10' sind in Querrichtung 9 derart ausgedehnt, daß zwischen ihnen ein Abstand verbleibt. Er hat die selbe Funktion wie der Einführungsschlitz 7. Der Querschnitt des Führungskanals 1 ist hinsichtlich einer parallel zur Höhenrichtung 8 verlaufenden und den Einführungsschlitz 7 durchdringenden Symmetrieachse achsensymmetrisch.

Der Führungskanal 1 besteht wenigstens im Bereich der Schleife 3 aus einem flexiblen Werkstoff, z.B. aus einem Kunststoff. Der flexible Werkstoff kann auch zur erleichterten Einlage des Leitungsbündels durch den Einführungsschlitz 7 in die Kavitäten 6 dienen.

Das Fixierelement 5 kann einteiliger Bestandteil des Führungskanalwerkstoffes sein. Das Fixierelement 5 wird dann beispielsweise durch Urformgebung bei der Herstellung des Führungskanals gefertigt.

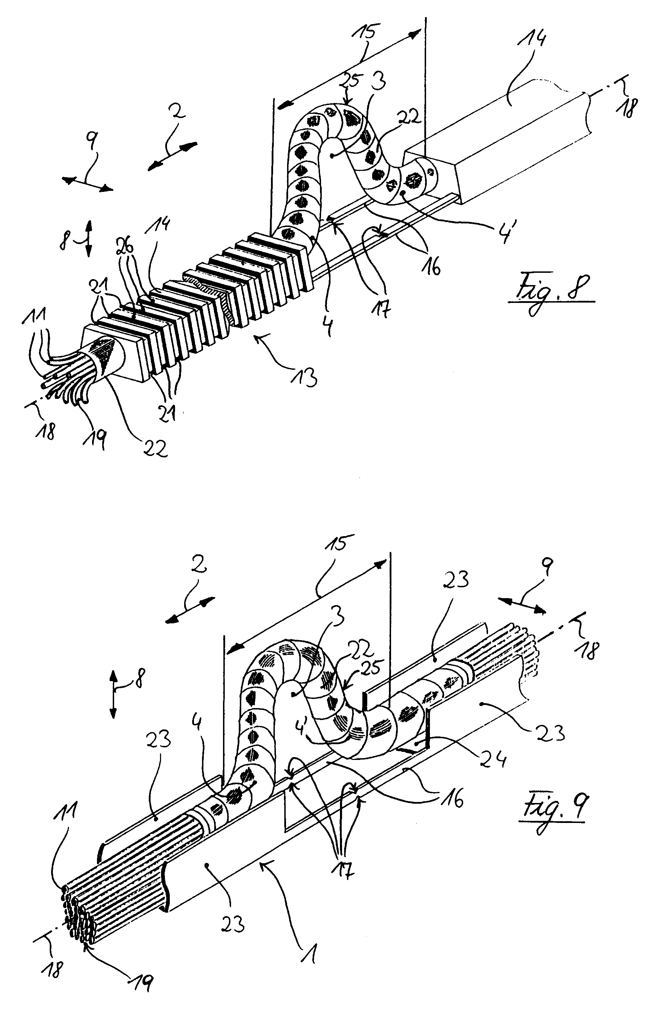

In Fig. 3 ist ein einzelnes Kabel 11 mit der Umwegstrecke 25 versehen. Die Umwegstrecke 25 ist zwischen zwei in Leitungslängsrichtung 2 verlaufenden Abschnitten des Kabels 11 angeordnet. Sie ist in Fig. 3 im wesentlichen analog der Umwegstrecke 25 in Fig. 1 als Schleife 3 ausgebildet. Die Fixierung der beiden Schleifenenden 4,4' erfolgt mittels einer separaten Bandage 12. Die Bandage 12 ist in Leitungslängsrichtung 2 um die Schleifenenden 4,4' herumgewickelt und fixiert letztere aneinander.

Bei einem Kabelbaum 13 gemäß Fig. 4 sind die einzelnen Kabel 11 von einer gemeinsamen Umhüllung 14 umgeben. Zwischen zwei Bereichen mit der Umhüllung 14 ist die Umwegstrecke 25 der Kabel 11 als Schleife 3 angeordnet. Im Bereich der Schleife 3 liegen die Kabel 11 ohne Umhüllung 14 frei.

Die Schleife 3 in Fig. 4 ist etwa in analoger Weise wie in Fig. 1 und Fig. 3 ausgebildet. Der Abstand der beiden Schleifenenden 4,4' in Leitungslängsrichtung 2 betrachtet ist jedoch in Fig. 4 erheblich größer als in Fig. 1 und Fig. 3. Dieser Abstand entspricht der Wirklänge 15 der Umwegstrecke.
Die beiden Schleifenenden 4,4' sind im Abstand der Wirklänge 15 durch zwei Fixierstege 16 zueinander fixiert.

Die beiden Fixierstege 16 verbinden die beiden Umhüllungen 14 miteinander. Die Fixierstege 16 verlaufen parallel zueinander in Leitungslängsrichtung 2 und sind einstückig an den sich gegenüberliegenden Stirnflächen der Umhüllungen 14 angeformt. Hierbei sind die Fixierstege 16 in Querrichtung 9 betrachtet in den Randbereichen der Umhüllungen 14 an letztere angeformt.

Die Fixierstege 16 haben eine rechteckige, stabähnliche Außenkontur. In Leitungslängsrichtung 2 betrachtet enthalten sie jeweils in ihrem mittleren Bereich eine Solltrennstelle 17, z.B. eine Einkerbung. Zur Änderung der Wirklänge 15 wird die Solltrennstelle 17 z.B. durchbrochen oder durch einen einfachen Schnitt durchtrennt.

Die Schleifenenden 4,4' tangieren eine Längsachse 18. Die Längsachse 18 verläuft parallel zur Leitungslängsrichtung 2 und durchdringt den Kabelbaum 13 im Zentrum seines Querschnitts. Die durch die Leitungslängsrichtung 2 und die Höhenrichtung 8 gebildete Schleifenebene ist in Fig. 1 und Fig. 3 ebenso wie in Fig. 4 in Höhenrichtung 8 betrachtet neben der Längsachse 18 angeordnet.

Sofern hinreichende Elastizität des Werkstoffes der Umhüllung 14 zur Bildung der Schleife 3 (Fig. 4) gewährleistet ist, ist es auch denkbar, die Kabelabschnitte im Schleifenbereich mit dem Umhüllungswerkstoff zu umgeben.

In Fig. 5 bis Fig. 8 sind weitere Ausführungsformen eines Kabelbaumes 13 dargestellt.

In Fig. 5 ist ein Leitungsbündel 19 in Leitungslängsrichtung 2 betrachtet in zwei Abschnitten von der Umhüllung 14 umgeben. Zwischen den beiden Abschnitten mit der Umhüllung 14 befindet sich die Umwegstrecke 25 des Kabelbaums 13. Sie ist durch eine sinusartige Welle gebildet. Die Umwegstrecke 25 enthält insgesamt fünf als Schleifen 3 wirksame Halbwellen. Die Schleifenebene ist durch die Leitungslängsrichtung 2 und die Höhenrichtung 8 gebildet. Die Schleifenebene wird von der Längsachse 18 in Höhenrichtung 8 betrachtet halbiert. Schleifenanfang und Schleifenende jeder einzelnen Schleife 3 werden von der Längsachse 18 geschnitten.

Im Bereich der Wirklänge 15 ist das Leitungsbündel 19 von einem flexiblen Hüllteil 20 umgeben, z.B. mit einem elastischen Kunststoff umspritzt. Das Hüllteil 20 hat in Leitungslängsrichtung 2 betrachtet einen rechteckigen Querschnitt. Dieser Querschnitt ist im Bereich der Schleifenenden 4,4' zentral um die Längsachse 18 angeordnet und wesentlich kleiner als der ebenfalls in Leitungslängsrichtung 2 betrachtet rechteckige Querschnitt der Umhüllung 14. Die Umhüllungen 14 bewirken eine Formstabilität des Kabelbaums 13 in den Bereichen außerhalb der Wirklänge 15.

Zur Ausgestaltung und Anordnung der Fixierstege 16 gelten die Ausführungen in Fig. 4. Die Fixierstege 16 weisen in Leitungslängsrichtung 2 betrachtet einen rechteckigen Querschnitt auf. In Höhenrichtung 8 gesehen sind sie in den unteren Eckbereichen der einander zugewandten rechteckigen Stirnflächen der Umhüllungen 14 angeordnet und dort angeformt. Es ist auch denkbar, daß die Fixierstege 16 länger als die Wirklänge 15 sind. In diesem Fall sind die in Fig. 5 nicht sichtbaren Enden der Fixierstege 16 von den Umhüllungen 14 umgeben.

In Fig. 6 ist der in Fig. 5 dargestellte Kabelbaum 13 erkennbar. Die Fixierstege 16 sind jedoch durchtrennt. Die mit dem Hüllteil 20 versehene Umwegstrecke des Kabelbaums 13 ist in Leitungslängsrichtung 2 völlig gestreckt, so daß die maximale Wirklänge 15 der Umwegstrecke 25 erreicht ist.

Der Kabelbaum 13 in der Fig. 7 enthält wie in Fig. 5 und Fig. 6 zwei Bereiche mit jeweils einer Umhüllung 14. Die Ausgestaltung und Anordnung der Umhüllungen 14 und der Fixierstege 16 sowie ihre gegenseitigen Verbindungen entsprechen im wesentlichen der Beschreibung in Fig. 5 und Fig. 6. Zwischen den beiden Bereichen mit den Umhüllungen 14 ist das Leitungsbündel 19 von dem flexiblen Hüllteil 20 umgeben. Das Hüllteil 20 hat in Leitungslängsrichtung 2 betrachtet eine rechteckige Außenkontur. Im Bereich der Schleifenenden 4,4' ist das Hüllteil 20 analog der Beschreibung in Fig. 5 an den Umhüllungen 14 angeordnet.

Entlang der Wirklänge 15 enthält die Umwegstrecke 25 des Kabelbaums 13 zwei Schleifen 3. Sie liegen in Höhenrichtung 8 aufeinander. Damit eine derartige Lagefixierung der Schleifen 3 gewährleistet ist, sind der Anfang und das Ende jeweils einer Schleife 3 - gesehen in Höhenrichtung 8 - durch das Fixierelement 5 (Fig. 1) verbunden. Die Schleifen 3 können auch durch ein diese in Höhenrichtung 8 und Querrichtung 9 umfassendes Halteband in ihrer Auslenkstellung gehalten sein.
Diese Ausgestaltung der Umwegstrecke 25 bewirkt in Leitungslängsrichtung 2 gesehen einen nur unwesentlich vergrößerten Querschnitt gegenüber dem entsprechenden Querschnitt des Kabelbaums 13 im Bereich der Umhüllungen 14.
Diese Ausgestaltung der Umwegstrecke 25 läßt sich bevorzugt bei Flachbandkabeln anwenden. Auch bei großen Längenänderungen zwischen zwei verschiedenen Längenversionen ist diese Anordnung der Umwegstrecke 25 günstig.

Enthält der Kabelbaum 13 eine Vielzahl von Schleifen 3 gemäß Fig. 7, so ist eine flexible Anpassung der Wirklänge 15 an vorher nicht genau bekannte Längenänderungen möglich. Zu diesem Zweck wird nur eine der notwendigen Wirklängenänderung entsprechende Anzahl von Fixierelementen gelöst.

In Fig. 8 ist die Umwegstrecke 25 des Kabelbaums durch eine Schleife 3 gebildet. Die Anordnung und Ausgestaltung der Schleife 3 entspricht im wesentlichen derjenigen in Fig. 4. Die Ausgestaltung der Fixierstege 16 und deren Anordnung an den Umhüllungen 14 entsprechen den Ausführungen in Fig. 5 bis Fig.7.

Die Umhüllungen 14 weisen in Leitungslängsrichtung 2 gesehen einen trapezförmigen Querschnitt auf. Eine der beiden Umhüllungen 14 ist an ihren sämtlichen in Leitungslängsrichtung 2 verlaufenden Oberflächen mit senkrecht zu dieser Richtung angeordneten Einschnitten 21 versehen. Jeweils zwei in Querrichtung 9 und zwei in Höhenrichtung 8 verlaufende Einschnitte 21 bilden einen geschlossenen Umlauf um die Längsachse 18. Der geschlossene Einschnittsumlauf bewirkt an dieser Stelle eine gegenüber der übrigen Umhüllung verkleinerte trapezförmige Außenkontur der Umhüllung 14. Die Einschnittsumläufe sind in gleichmäßigem Abstand in Leitungslängsrichtung 2 verteilt. Die Abstände selbst sind durch radial um das Leitungsbündel 19 vorstehende Rippen 26 gebildet, deren Querschnitt demjenigen der nicht mit den Einschnitten 21 versehenen Umhüllung 14 entspricht. Die Umhüllung 14 mit den Rippen 26 hat dadurch das Aussehen einer in Leitungslängsrichtung 2 auseinandergezogenen Ziehharmonika.

In Fig. 8 ist erkennbar, daß die einzelnen Kabel 11 durch ein sie umgebendes Halteband 22 als Leitungsbündel 19 zusammengehalten sind. Das Halteband 22 wiederum ist von den Umhüllungen 14 umgeben.

Die mit den Rippen 26 versehene Umhüllung 14 hat den Vorteil, daß im Kabelbaum 13 einliegende Kabel 11 oder Leitungsbündel 19 nicht in Höhenrichtung 8 nach außen gelangen und der Kabelbaum 13 im Gegensatz zu glatten Oberflächen der Umhüllung 14 besser vor mechanischen Beschädigungen z.B. durch Abscheuern der Oberfläche der Umhüllung 14 geschützt ist. Damit sind auch die Kabel 11 oder das Leitungsbündel 19 vor Beschädigungen geschützt. Im Falle von elektrischen Leitungen wird eine Kurzschlußgefahr vermieden.

Die Einschnitte 21 bewirken, daß die ansonsten formstabile Umhüllung 14 bis zu einem bestimmten Grad biegbar ist.
Auch können die Einschnitte 21 dazu verwendet werden, den Kabelbaum 13 in eine Haltevorrichtung einzurasten oder auf andere Weise ortsfest zu fixieren.

Fig. 9 läßt einen Führungskanal 1 erkennen, der mit dem Leitungsbündel 19 bestückt ist. Die Umwegstrecke des Leitungsbündels 19 ist analog den Ausführungen in Fig. 8 als Schleife 3 angeordnet und ausgestaltet.
Im Bereich der Schleife 3 sind die einzelnen Kabel 11 des Leitungsbündels 19 von dem Halteband 22 umhüllt. Die Umhüllung der Kabel 11 durch das Halteband 22 ersteckt sich etwas über die Schleifenenden 4,4' in Leitungslängsrichtung 2 hinaus. In dem größten Bereich der in Leitungslängsrichtung 2 verlaufenden Abschnitte des Leitungsbündels 19 übernimmt jedoch der Führungskanal 1 die Bündelungs- und Hüllfunktion für die Kabel 11.

Der Führungskanal 1 weist in Leitungslängsrichtung 2 gesehen einen U-förmigen Querschnitt auf. Entsprechend den U-Schenkeln enthält der Führungskanal 1 zwei parallel zueinander angeordnete und in Leitungslängsrichtung 2 verlaufende Kanalseitenwände 23. Sie liegen in einer durch die Leitungslängsrichtung 2 und die Höhenrichtung 8 gebildeten Ebene ein. Die sich in Querrichtung 9 gegenüberliegenden Kanalseitenwände 23 sind durch einen dem U-Grund entsprechenden Kanalboden 24 miteinander verbunden. Kanalseitenwände 23 und Kanalboden 24 sind senkrecht zueinander angeordnet.
Im Bereich der Schleife 3 sind die Kanalseitenwände 23 auf die Abmessungen der Fixierstege 16 reduziert. In Querrichtung 9 gesehen erhält der Führungskanal 1 deshalb zwei sich gegenüberliegende rechteckige Einschnitte. Die Fixierstege 16 sind einstückiger Bestandteil der Kanalseitenwände 23 und verbinden die sich in Leitungslängsrichtung 2 gegenüberliegenden, dem Kanalboden 24 am nächsten angeordneten Bereiche der Kanalseitenwände 23 miteinander. Damit die beiden Führungskanalabschnitte nach dem Durchtrennen der Fixierstege 16 in Leitungslängsrichtung 2 verschoben werden können, ist im Bereich der Wirklänge 15 kein Kanalboden 24 vorhanden.

Jeder Fixiersteg 16 ist durch zwei Solltrennstellen 17 in zwei etwa gleichlange Teile getrennt. Die beiden Solltrennstellen 17 jeweils eines Fixiersteges 16 sind als V-förmige Einschnitte in die in Höhenrichtung 8 gegenüberliegenden Oberflächen des Fixiersteges 16 ausgebildet. Hierbei sind die Öffnungen der in Querrichtung 9 gesehen V-förmigen Solltrennstellen 17 einander abgewandt.

Die in den Figuren dargestellten Führungskanäle 1 bzw. Kabelbäume 13 weisen jeweils eine in Leitungslängsrichtung 2 ausgerichtete, vorbestimmte, der Normalversion des Fahrzeugtyps angepaßte Länge auf.

Um die Wirklänge 15 des Erfindungsgegenstandes zu verändern, werden das Fixierelement 5, die Bandage 12 und/oder die Solltrennstellen 17 der Fixierstege 16 durchtrennt. Die Lösung des Fixierelementes 5 erfolgt z.B. durch einen Schnitt, wodurch die Hüll- und Schutzfunktion des Führungskanals 1 (Fig. 1) oder des Hüllteils 20 (Fig. 7) jedoch nicht beeinträchtigt ist.
Das Fixierelement 5 kann z.B. auch nach Art einer aufreißbaren Kunststoffflasche ausgebildet sein.
Die Fixierstege 16 sind vorzugsweise starr ausgebildet, damit diese im Bereich der Solltrennstelle 17 auch durch einen einfachen Bruch durchtrennt werden können.

Nach Lösung der Fixierungen des Führungskanals 1 bzw. des Kabelbaums 13 läßt sich die Wirklänge 15 vergrößern und das Leitungsbündel 19 auf eine der Langversion angepaßte Länge in Leitungslängsrichtung 2 auseinanderziehen. Hierbei werden die Schleifen 3 zumindest teilweise aufgehoben.

### Bezugszeichenliste

- 1: Führungskanal
- 2: Leitungslängsrichtung
- 3: Schleife
- 4: Schleifenende
- 4': Schleifenende
- 5: Fixierelement
- 6: Kavität
- 7: Einführungsschlitz
- 8: Höhenrichtung
- 9: Querrichtung
- 10: Trennsteg
- 10': Trennsteg
- 11: Kabel
- 12: Bandage
- 13: Kabelbaum
- 14: Umhüllung
- 15: Wirklänge
- 16: Fixiersteg
- 17: Solltrennstelle
- 18: Längsachse
- 19: Leitungsbündel
- 20: Hüllteil
- 21: Einschnitt
- 22: Halteband
- 23: Kanalseitenwand
- 24: Kanalboden
- 25: Umwegstrecke
- 26: Rippe

## Patentansprüche

1. Versorgungsleitungen (11) in gebündelter Form enthaltender Kabelbaum (13) oder für die Aufnahme der Versorgungsleitungen (11) bestimmter Führungskanal (1) - beide nachstehend kurz als "Leitungshalter" bezeichnet-, mit einer in einem Bündelungsbereich angeordneten Umwegstrecke (25) des Leitungsbündels (11,19),
gekennzeichnet durch
ein die Umwegstrecke (25) in ihrer Wirksamkeit erhaltendes Fixierelement (5,12,16), durch dessen irreversible Lösung das Leitungsbündel (11,19) ohne Einwirkung auf die Leitungsfunktionen in seiner Wirklänge (15) zu einer Langversion, insbesondere für Kraftfahrzeuge, verlängerbar ist.

2. Leitungshalter nach Anspruch 1,
dadurch gekennzeichnet,
daß die Umwegstrecke (25) die Form einer mindestens teilweise außerhalb der Längsachse (18) des Leitungshalters (1,11) liegenden Schleife (3) aufweist.

3. Leitungshalter nach Anspruch 2,
dadurch gekennzeichnet,
daß die Schleifenebene neben der Längsachse (18) des Leitungshalters (1,11) liegt.

4. Leitungshalter nach Anspruch 2,
dadurch gekennzeichnet,
daß die Längsachse (18) in der Schleifenebene verläuft und dabei die Umwegstrecke (25) schneidet.

5. Leitungshalter nach einem der Ansprüche 2 bis 4,
gekennzeichnet durch
eine Ω-Form der Schleife (3).

6. Leitungshalter nach einem der Ansprüche 1 bis 3,
dadurch gekennzeichnet,
daß die Umwegstrecke (25) mehrere in Leitungslängsrichtung (2) aneinandergereihte Schleifen (3) enthält.

7. Leitungshalter nach Anspruch 4,
dadurch gekennzeichnet,
daß die Umwegstrecke (25) durch eine sinusartige Welle gebildet ist.

8. Leitungshalter nach Anspruch 7,
dadurch gekennzeichnet,
daß die Welle in Leitungslängsrichtung (2) verläuft.

9. Leitungshalter nach einem oder mehreren der vorhergehenden Ansprüche,
dadurch gekennzeichnet,
daß das Fixierelement (5,12,16) die Enden (4,4') der Umwegstrecke (25) auf gegenüber deren Länge verkürztem Weg miteinander verbindet.

10. Leitungshalter nach Anspruch 9,
dadurch gekennzeichnet,
daß das Fixierelement (5,12,16) die Enden (4,4') der Umwegstrecke (25) in Aneinanderlage miteinander verbindet.

11. Leitungshalter nach Anspruch 10,
dadurch gekennzeichnet,
daß das Fixierelement (5,12,16) eine Bandage, ein Band oder eine Klammer ist.

12. Leitungshalter nach einem oder mehreren der vorhergehenden Ansprüche,
dadurch gekennzeichnet,
daß das Fixierelement (5,12,16) eine stoffschlüssige Verbindung zwischen den Versorgungsleitungen (11), deren Isolierungen oder den im Bereich der Enden (4,4') der Umwegstrecke (25) befindlichen Bereichen des Leitungshalters (1,13) ist.

13. Leitungshalter nach Anspruch 12,
dadurch gekennzeichnet,
daß der Stoffschluß durch eine Schweißverbindung hergestellt ist.

14. Leitungshalter nach Anspruch 9,
dadurch gekennzeichnet,
daß das Fixierelement ein mit seinen Enden im Leitungshalter (1,13) fixiert einliegendes Verbundelement (16) ist.

15. Leitungshalter nach Anspruch 9,
dadurch gekennzeichnet,
daß das Fixierelement (5,12,16) aus dem Werkstoff des Leitungshalters (1,13) besteht und einstückig mit diesem geformt, insbesondere aus Kunststoff gespritzt ist.

16. Leitungshalter nach Anspruch 14 oder 15,
dadurch gekennzeichnet,
daß das einstückig aus dem Werkstoff des Leitungshalters (1,13) geformte Fixierelement das Verbundelement (16) als Verstärkungseinlage enthält.

17. Leitungshalter nach einem oder mehreren der vorhergehenden Ansprüche,
dadurch gekennzeichnet,
daß das Fixierelement (5,12,16) eine Solltrennstelle (17) enthält.

18. Leitungshalter nach einem oder mehreren der vorhergehenden Ansprüche,
dadurch gekennzeichnet,
daß mindestens ein Fixierelement (5,12,16) parallel zur Längsachse (18) verlaufend an dem Leitungshalter (1,13) angeordnet ist.

19. Leitungshalter nach einem oder mehreren der vorhergehenden Ansprüche,
dadurch gekennzeichnet,
daß der Führungskanal (1) außerhalb der Umwegstrecke (25) einen U-förmigen Querschnitt aufweist und die an die Umwegstrecke (25) angrenzenden Bereiche des Führungskanals (1) durch zwei Fixierelemente (16) miteinander verbunden sind, wobei jeweils ein Fixierelement die sich in Längsrichtung gegenüberliegenden Winkelbereiche der U-Form des Führungskanals (1) miteinander verbindet.

20. Leitungshalter nach einem oder mehreren der vorhergehenden Ansprüche,
dadurch gekennzeichnet,
daß der Führungskanal (1) eine rohrartige Rinne mit einem etwa parallel zur Längsachse (18) verlaufenden, seinen Mantel durchsetzenden Einführungsschlitz (7) für die Einlage des Leitungsbündels (11,19) ist.

21. Leitungshalter nach einem oder mehreren der vorhergehenden Ansprüche,
dadurch gekennzeichnet,
daß eine das Leitungsbündel (11,19) umgebende Umhüllung (14) in ihrem an die Umwegstrecke (25) angrenzenden Bereich radial vorstehende Vorsprünge, insbesondere über den gesamten Umfang wirksame Rippen (26) als mechanischen Beschädigungsschutz aufweist.

## Claims

1. A cable harness (13) containing supply lines (11) in a bundled form or a guide channel (1) intended for receiving the supply lines (11) - both designated briefly below as "line holders" -,with a deviation path (25) of the line bundle (11, 19) arranged in the bundling zone,
characterized by
a fixing element (5, 12, 16) receiving the deviation path (25) in its functional state, by means of the irreversible release of which element the line bundle (11, 19) can be lengthened in its effective length (15) into a long version, in particular for motor vehicles, without affecting the line functions.

2. A line holder according to claim 1,
characterized in that
the deviation path (25) has the shape of a loop (3) lying at least partly outside the longitudinal axis (18) of the line holder (1, 11).

3. A line holder according to claim 2,
characterized in that
the plane of the loop lies next to the longitudinal axis (18) of the line holder (1, 11).

4. A line holder according to claim 2,
characterized in that
the longitudinal axis (18) extends in the plane of the loop and intersects the deviation path (25) in this arrangement.

5. A line holder according to one of claims 2 to 4,
characterized by
a Ω-shape of the loop (3).

6. A line holder according to one of claims 1 to 3,
characterized in that
the deviation path (25) contains several loops (3) disposed in series in the longitudinal line direction (2).

7. A line holder according to claim 4,
characterized in that
the deviation path (25) is formed by a sinusoidal wave.

8. A line holder according to claim 7,
characterized in that
the wave extends in the longitudinal line direction (2).

9. A line holder according to one or more of the preceding claims,
characterized in that
the fixing element (5, 12, 16) joins the ends (4, 4') of the deviation path (25) to each other in a path that has been shortened as compared with its length.

10. A line holder according to claim 9,
characterized in that
the fixing element (5, 12, 16) joins the ends (4, 4') of the deviation path (25) to each other in an adjacent position.

11. A line holder according to claim 10,
characterized in that
the fixing element (5, 12, 16) is a bandage, a tape or a clip.

12. A line holder according to one or more of the preceding claims,
characterized in that
the fixing element (5, 12, 16) is a material bond between the supply lines (11), their insulations or the zones of the line holder (1, 13), disposed in the zone of the ends (4, 4') of the deviation path (25).

13. A line holder according to claim 12,
characterized in that
the material is produced by a welded joint.

14. A line holder according to claim 9,
characterized in that
the fixing element is a connecting element (16) inserted with its ends in the line holder (1, 13).

15. A line holder according to claim 9,
characterized in that
the fixing element (5, 12, 16) consists of the material of the line holder (1, 13), and is integrally formed with the latter, being in particular injection-moulded from a synthetic material.

16. A line holder according to claim 14 or 15,
characterized in that
the fixing element integrally formed from the material of the line holder (1, 13) contains the connecting element (16) as a stiffening insert.

17. A line holder according to one or more of the preceding claims,
characterized in that
the fixing element (5, 12, 16) contains a predetermined breaking point (17).

18. A line holder according to one or more of the preceding claims,
characterized in that
at least one fixing element (5, 12, 16) is arranged on the line holder (1, 13), extending parallel to the longitudinal axis (18).

19. A line holder according to one or more of the preceding claims,
characterized in that
the guide channel (1) has a U-shaped cross-section outside the deviation path (25); and that the zones of the guide channel (1) adjoining the deviation path (25) are joined to each other by two fixing elements (16), in which arrangement one fixing element each connects the angular zones of the U-shape of the guide channel (1) to each other.

20. A line holder according to one or more of the preceding claims,
characterized in that
the guide channel (1) is a tubular conduit with an insertion slit (7) passing through its cover and extending approximately parallel to the longitudinal axis (18) for the insertion of the line bundle (11, 19).

21. A line holder according to one or more of the preceding claims,
characterized in that
a sheath (14) surrounding the line bundle (11, 19) has, in its zone adjoining the deviation path (25), radially projecting projections, in particular ribs (26) that are effective over the whole circumference as a mechanical protection against damage.

## Revendications

1. Faisceau de câbles (13) contenant des conduites d'alimentation (11) sous forme rassemblée, ou canal de guidage (1) destiné à recevoir les conduites d'alimentation (11) - désignés tous deux brièvement par la suite comme "porte-câbles" -, comprenant un tronçon détourné (25) du faisceau de câbles (11, 19) agencé dans une région du faisceau,
caractérisé par un élément de fixation (5, 12, 16) qui maintient effectif le tronçon détourné (25), dont la libération irréversible permet d'allonger le faisceau de câbles (11, 19), sans influence sur les fonctions de conduction, quant à sa longueur effective (15) jusqu'à une version longue, en particulier pour véhicules automobiles.

2. Porte-câbles selon la revendication 1, caractérisé en ce que le tronçon détourné (25) présente la forme d'une boucle (3) située au moins à l'extérieur de l'axe longitudinal (18) du porte-câbles (1, 11).

3. Porte-câbles selon la revendication 2, caractérisé en ce que le plan de la boucle est disposé à côté de l'axe longitudinal (18) du porte-câbles (1, 11).

4. Porte-câbles selon la revendication 2, caractérisé en ce que l'axe longitudinal (18) s'étend dans le plan de la boucle et recoupe alors le tronçon détourné (25).

5. Porte-câbles selon l'une quelconque des revendications 2 à 4, caractérisé en ce que la boucle (3) a la forme d'un Ω.

6. Porte-câbles selon l'une quelconque des revendications 1 à 3, caractérisé en ce que le tronçon détourné (25) comporte plusieurs boucles (3) arrangées en succession dans la direction longitudinale (2).

7. Porte-câbles selon la revendication 4, caractérisé en ce que le tronçon détourné (25) est formé par une ondulation sinusoïdale.

8. Porte-câbles selon la revendication 7, caractérisé en ce que l'ondulation s'étend dans la direction longitudinale (2).

9. Porte-câbles selon l'une ou plusieurs des revendications précédentes, caractérisé en ce que l'élément de fixation (5, 12, 16) relie ensemble les extrémités (4, 4') du tronçon détourné (25) à une distance raccourcie par rapport à leur longueur.

10. Porte-câbles selon la revendication 9, caractérisé en ce que l'élément de fixation (5, 12, 16) relie ensemble les extrémités (4, 4') du tronçon détourné (25) dans une position de contact mutuel.

11. Porte-câbles selon la revendication 10, caractérisé en ce que l'élément de fixation (5, 12, 16) est un bandage, une bande ou une pince.

12. Porte-câbles selon l'une ou plusieurs des revendications précédentes, caractérisé en ce que l'élément de fixation (5, 12, 16) est une jonction à intégration de matière entre les conduites d'alimentation (11), entre leurs isolations, ou entre les régions du porte-câbles (1, 13) qui sont situées dans la zone des extrémités (4, 4') du tronçon détourné (25).

13. Porte-câbles selon la revendication 12, caractérisé en ce que le blocage par intégration de matière est produit par une liaison soudée.

14. Porte-câbles selon la revendication 9, caractérisée en ce que l'élément de fixation est un élément de raccordement (16) qui est intégré et fixé par des ses extrémités dans le porte-câbles (1, 13).

15. Porte-câbles selon la revendication 9, caractérisé en ce que l'élément de fixation (5, 12, 16) est formé à partir du matériau du porte-câbles (1, 13), et est formé d'une seule pièce avec celui-ci, en particulier injecté en matière plastique.

16. Porte-câbles selon l'une ou l'autre des revendications 14 et 15, caractérisé en ce que l'élément de fixation formé d'une seule pièce à partir du matériau du porte-câbles (1, 13) contient l'élément de liaison (16) sous la forme d'un insert de renfort.

17. Porte-câbles selon l'une ou plusieurs des revendications précédentes, caractérisé en ce que l'élément de fixation (5, 12, 16) comporte un emplacement de rupture désiré (17).

18. Porte-câbles selon l'une ou plusieurs des revendications précédentes, caractérisé en ce qu'au moins un élément de fixation (5, 12, 16) est agencé parallèlement à l'axe longitudinal (18), en s'étendant le long du porte-câbles (1, 13).

19. Porte-câbles selon l'une ou plusieurs des revendications précédentes, caractérisé en ce que le canal de guidage (1) présente à l'extérieur du tronçon détourné (25) une section transversale en forme de U, et en ce que les régions du canal de guidage (1) voisines du tronçon détourné (25) sont reliées ensemble au moyen de deux éléments de fixation (16), chaque élément de fixation reliant ensemble les régions en équerre, en vis-à-vis dans la direction longitudinale, de la forme en U du canal de guidage (1).

20. Porte-câbles selon l'une ou plusieurs des revendications précédentes, caractérisé en ce que le canal de guidage (1) est une goulotte tubulaire comportant une fente d'introduction (7), qui s'étend approximativement à l'axe longitudinal (18) et traverse son enveloppe pour la mise en place du faisceau de câbles (11, 19).

21. Porte-câbles selon l'une ou plusieurs des revendications précédentes, caractérisé en ce qu'une enveloppe (14) qui entoure le faisceau de câbles (11, 19), comporte dans sa région voisine du tronçon détourné (25), des saillies qui se projettent radialement, en particulier des nervures (26) qui s'étendent sur la totalité de la périphérie, en tant que protection mécanique contre les endommagements.
